# EUROPÄISCHE PATENTSCHRIFT

(11) **EP 0 668 818 B1**
(45) Veröffentlichungstag und Bekanntmachung des Hinweises auf die Patenterteilung: **07.08.1996**
(21) Anmeldenummer: 94921527.1
(22) Anmeldetag: 27.07.1994
(51) Int. Cl.: B29C 47/00, A22C 13/00, B29C 47/88

(54) **VORRICHTUNG UND VEFAHREN ZUR HERSTELLUNG CELLULOSISCHER FOLIEN**
PROCESS AND DEVICE FOR PRODUCING CELLULOSE FILMS
PROCEDE ET DISPOSITIF DE PRODUCTION DE FEUILLES EN CELLULOSE

(30) Priorität: 13.09.1993 AT 1845/93
(43) Veröffentlichungstag der Anmeldung: 30.08.1995
(73) Patentinhaber: LENZING AKTIENGESELLSCHAFT, A-4860 Lenzing (AT)
(72) Erfinder: ZIKELI, Stefan, A-4844 Regau (AT); ECKER, Friedrich, A-4850 Timelkam (AT); RAUCH, Ernst, A-4861 Schörfling (AT); RENNER, Klaus, A-4860 Lenzing (AT); SCHÖNBERG, Anton, A-4844 Regau (AT)
(74) Vertreter: Schwarz, Albin, Dr. Kopecky & Schwarz Patentanwälte
(86) Internationale Anmeldenummer: AT9400099
(87) Internationale Veröffentlichungsnummer: WO9507811

(56) Entgegenhaltungen:
- EP-A- 0 305 605
- EP-A- 0 553 367
- WO-A-93/13670
- DE-A- 2 045 944

## Beschreibung

Die vorliegende Erfindung betrifft eine Vorrichtung und ein Verfahren zur Herstellung cellulosischer Folien durch Extrusion einer erhitzten Lösung von Cellulose in einem tertiären Aminoxid über eine Luftstrecke in ein Fällbad. Die vorliegende Erfindung betrifft insbesondere eine Vorrichtung und ein Verfahren zur Herstellung cellulosischer Schlauchfolien. Im Sinne der nachfolgenden Beschreibung und Patentansprüche ist die Bezeichnung "Folie" so zu verstehen, daß damit auch andere flächige Formkörper wie Filme umfaßt werden.

Aus der US-PS 2,179,181 ist bekannt, daß tertiäre Aminoxide Cellulose zu lösen vermögen und daß aus diesen Lösungen durch Fällung cellulosische Formkörper wie Fasern gewonnen werden können. Ein Verfahren zur Herstellung derartiger Lösungen ist beispielsweise aus der EP-A - 0 356 419 bekannt. Gemäß dieser Veröffentlichung wird zunächst eine Suspension von Cellulose in einem wässerigen tertiären Aminoxid bereitet. Das Aminoxid enthält bis zu 40 Masse-% Wasser. Die wässerige Cellulosesuspension wird erhitzt und unter Druckverminderung wird so lange Wasser abgezogen, bis die Cellulose in Lösung geht.

Aus der DE-A - 28 44 163 ist bekannt, zur Herstellung von Cellulosefasern zwischen Spinndüse und Fällbad eine Luftstrecke bzw. einen Luftspalt zu legen, um einen Düsenverzug zu erreichen. Dieser Düsenverzug ist notwendig, da nach Kontakt der geformten Spinnlösung mit dem wässerigen Fällbad eine Reckung der Fäden sehr erschwert wird. Im Fällbad wird die im Luftspalt eingestellte Faserstruktur fixiert.

Ein Verfahren zur Herstellung cellulosischer Fäden ist weiters aus der DE-A - 28 30 685 bekannt, wonach eine Lösung von Cellulose in einem tertiären Aminoxid in warmem Zustand zu Filamenten geformt, die Filamente mit Luft abgekühlt und anschließend in ein Fällbad eingebracht werden, um die gelöste Cellulose zu fällen. Die Oberfläche der versponnenen Fäden wird weiters mit Wasser benetzt, um ihre Neigung, an benachbarten Fäden anzukleben, zu vermindern.

Eine Vorrichtung und ein Verfahren der eingangs erwähnten Art zur Herstellung von nahtlosen Schlauchfolien ist aus der WO 93/13670 bekannt. Gemäß diesem bekannten Verfahren wird die Celluloselösung durch eine Extrusionsdüse mit ringförmigem Extrusionsspalt zu einem Schlauch geformt, der über einen zylindrischen Dorn gezogen und in das Fällbad eingebracht wird. Damit der extrudierte Schlauch nicht an der Dornoberfläche haften bleibt, wird seine Oberfläche mit einem Wasserfilm überzogen, sodaß die Innenseite des Schlauches koaguliert und über den zylindrischen Dorn gleitet. Dies hat jedoch den Nachteil, daß das zur Benetzung der Dornoberfläche eingespeiste Wasser bis zum Extrusionspalt steigen kann und die Düsenlippe benetzt, wodurch es nicht nur bereits beim eigentlichen Extrusionsvorgang zu unerwünschten Koagulationen kommt, sondern auch die Extrusionsdüse abgekühlt wird. Dies ist deshalb unerwünscht, da die abgekühlte Düse die zu extrudierende Lösung abkühlt, deren Viskosität dadurch derart zunimmt, daß ein einwandfreies Extrudieren zu Folien mit gleichmäßiger Dicke nicht mehr möglich ist. Dazu kommt noch, daß sich die vorbekannte Vorrichtung nur aufwendig umbauen läßt, wenn z.B. Folien mit unterschiedlichen Dicken hergestellt werden sollen.

Ein weiterer Nachteil der in der WO 93/13670 beschriebenen Vorrichtung besteht darin, daß sie keine hohen Produktionsleistungen erlaubt. Dies deshalb, weil die Kühlung des Extrudates nicht effizient genug ist, da die Wärme der erhitzten, extrudierten Folie nicht schnell genug abgeführt werden kann.

Die zu extrudierenden Celluloselösungen müssen u.a. aufgrund ihrer außerordentlich hohen Viskosität auf Temperaturen über 110°C erhitzt werden, um überhaupt verarbeitet werden zu können. Nach Austritt des Extrudates aus der Düsenlippe sollte sich die extrudierte Lösung zu einem gewissen Ausmaß abkühlen und verfestigen, damit sie vor dem Einbringen in das Fällbad, also vor dem Koagulieren, verzogen werden kann. Ist die Kühlung nicht effizient, so muß die Verweilzeit der extrudierten Lösung in der Luftstrecke entsprechend lang sein, was nur über ein Verlangsamen der Abzugsgeschwindigkeit erreicht werden kann. Wird andererseits mit niedrigerer Temperatur extrudiert, so kommt es zu Problemen bei der Masseverteilung in der Extrusionsvorrichtung.

Es ist die Aufgabe der vorliegenden Erfindung, eine Vorrichtung und ein Verfahren zur Herstellung cellulosischer Folien durch Extrusion einer erhitzten Lösung von Cellulose in einem tertiären Aminoxid zur Verfügung zu stellen, das die oben genannten Nachteile nicht aufweist und insbesondere eine hohe Produktionsleistung aufweist.

Die erfindungsgemäße Vorrichtung der eingangs erwähnten Art zur Herstellung cellulosischer Folien umfaßt eine Extrusionsdüse mit einem Extrusionsspalt und ist dadurch gekennzeichnet, daß unmittelbar unterhalb des Extrusionsspaltes eine Zuführung für Kühlgas zur Kühlung der extrudierten Folie vorgesehen ist. Als Kühlgas eignet sich z.B. gekühlte Luft mit einer Temperatur von beispielweise -10°C bis +5°C. Aber auch Luft mit Raumtemperatur kann zur Kühlung des erhitzten Extrudates verwendet werden. Es liegt auf der Hand, daß durch die erfindungsgemäße Kühlung mit Gas über die Parameter Temperatur und Zufuhrmenge die Kühlleistung den jeweiligen Prozeßbedingungen auf einfache Weise angepaßt werden kann, wodurch die Produktivität beträchtlich gesteigert wird.

Eine zweckmäßige Ausgestaltung der erfindungsgemäßen Vorrichtung besteht darin, daß beiderseits des Extrusionspaltes eine Zuführung für Kühlgas vorgesehen ist.

Eine bevorzugte Ausgestaltung der erfindungsgemäßen Vorrichtung dient zur Herstellung cellulosischer Schlauchfolien und ist dadurch gekennzeichnet, daß der Extrusionsspalt der Extrusionsdüse im wesentlichen ringförmig ausgebildet ist und daß die Zuführung für Kühlgas außerhalb des vom Extrusionspalt gebildeten Ringes vorgesehen ist. Diese Ausgestaltung der erfindungsgemäßen Vorrichtung eignet sich gut zur Herstellung von Schlauchfolien mit relativ kleinem Durchmesser von z.B. weniger als 70 mm.

Eine andere bevorzugte Ausgestaltung der erfindungsgemäßen Vorrichtung mit ringförmiger Ausbildung des Extrusionspaltes dient zur Herstellung cellulosischer Schlauchfolien mit größerem Durchmesser und ist dadurch gekennzeichnet, daß die Zuführung für Kühlgas innerhalb des vom Extrusionspalt gebildeten Ringes vorgesehen ist. In diesem Fall muß auch eine Ableitung für gebrauchtes Kühlgas im Inneren des vom Extrusionsspalt gebildeten Ringes vorgesehen sein, da das gebrauchte Kühlgas nicht durch den geschlossenen Schlauch austreten kann. Die Zuführung für Kühlgas ist am besten derart ausgebildet, daß das Kühlgas auf die Austrittskante des Extrusionsspaltes gerichtet ist.

Zur besonders effizienten Kühlung weist diese Ausgestaltung der erfindungsgemäßen Vorrichtung eine weitere Zuführung für Kühlgas auf, welche außerhalb des vom Extrusionsspalt gebildeten Ringes vorgesehen ist.

Besonders bewährt hat sich eine Vorrichtung, die noch zusätzlich im Zentrum des vom Extrusionsspalt gebildeten Ringes eine Zuführung für ein Cellulose-Fällungsmittel und eine Ableitung für Fällbadflüssigkeit aufweist.

Es hat sich weiters als zweckmäßig erwiesen, wenn die erfindungsgemäße Vorrichtung unterhalb der Ableitung für die Fällbadflüssigkeit mindestens eine Distanzscheibe aufweist. Durch dieses Merkmal kann ein zusammenfallen der extrudierten Folie im Fällbad wirksam verhindert werden.

Die Erfindung betrifft weiters ein Verfahren zur Herstellung cellulosischer Folien, bei dem eine Lösung von Cellulose in einem tertiären Aminoxid in erhitztem Zustand durch eine Extrusionsdüse mit einem Extrusionsspalt extrudiert und die erhitzte, extrudierte Lösung in ein Fällbad geführt wird, um die gelöste Cellulose zu fällen, welches dadurch gekennzeichnet ist, daß die erhitzte, extrudierte Lösung vor dem Einbringen in das Fällbad gekühlt wird, indem die erhitzte Lösung unmittelbar nach dem Extrudieren einem Gasstrom ausgesetzt wird. Besonders bewährt hat sich dabei, wenn der Gasstrom im wesentlichen im rechten Winkel zur Extrusionsrichtung steht.

Eine effiziente Kühlung ist dann gegeben, wenn die erhitzte, extrudierte Lösung zwei Gasströmen ausgesetzt wird, wobei dies am besten derart geschieht, daß sie die warme, extrudierte Lösung an ihren gegenüberliegenden Seiten treffen.

Das erfindungsgemäße Verfahren kann zur Herstellung cellulosischer Schlauchfolien mit relativ kleinem Durchmesser (z.B. weniger als 70 mm) angewandt werden, wenn die erhitzte, cellulosische Lösung durch eine Extrusionsdüse mit ringförmigem Extrusionsspalt schlauchförmig extrudiert wird, wobei die erhitzte, schlauchförmig extrudierte Lösung dem Gasstrom an ihrer Außenseite ausgesetzt wird. Zur Herstellung von Schlauchfolien mit größerem Durchmesser ist es am besten, wenn die extrudierte Lösung von innen gekühlt wird. Auch bei dieser Ausgestaltung des erfindungsgemäßen Verfahrens wird eine besonders effiziente Kühlung dann erzielt, wenn die erhitzte, schlauchförmig extrudierte Lösung sowohl an ihrer Innenseite als auch an ihrer Außenseite einem Gasstrom ausgesetzt wird.

Es hat sich als zweckmäßig erwiesen, die erhitzte, schlauchförmig extrudierte Lösung nach Kühlung und vor der Führung in das Fällbad an ihrer Innenseite mit einem Cellulose-Fällungsmittel in Kontakt zu bringen.

Die erfindungsgemäße Vorrichtung und das erfindungsgemäße Verfahren eignen sich besonders gut zur Verarbeitung wässeriger Lösungen von Cellulose in N-Methylmorpholin-N-oxid (NMMO).

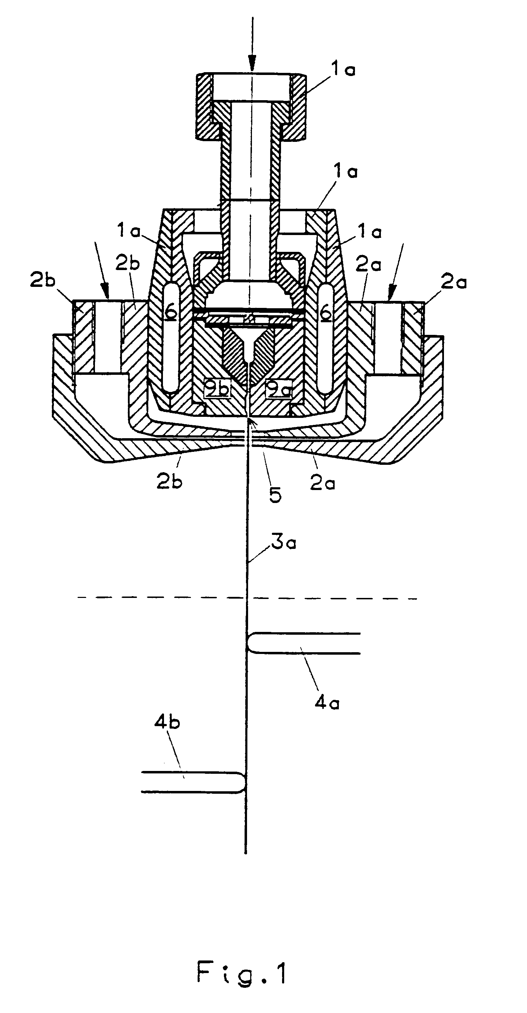

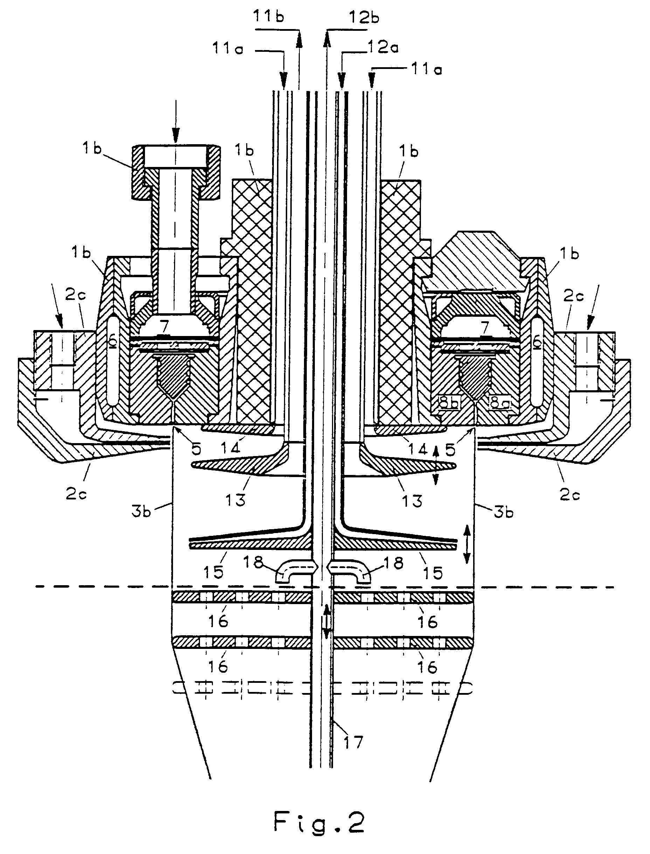

An Hand der beigefügten Zeichung werden bevorzugte Ausgestaltungen der Erfindung noch näher erläutert, wobei die Figur 1 eine Vorrichtung zur Herstellung cellulosischer Folien und Figur 2 eine Vorrichtung zur Herstellung cellulosischer Schlauchfolien schematisch zeigen.

Fig. 1 zeigt einen Querschnitt einer länglichen Extrusionsvorrichtung, die im wesentlichen aus einer Extrusionsdüse 1a und zwei Zuführungen 2a und 2b für Kühlgas besteht, mit denen die folienartig extrudierte Lösung 3a beiderseits gekühlt wird. Die Einbringung von Kühlluft in die Zuführungen 2a und 2b ist mit schräg nach unten gerichteten Pfeilen angedeutet. Das gekühlte Extrusionsgut wird über eine Luftstrecke, die durch die Entfernung der Düsenunterseite zur Oberfläche des Fällbades definiert ist, in das Fällbad abgezogen. Im Fällbad koaguliert die Cellulose und das tertiäre Aminoxid wird in das Fällbad abgegeben. Die Fällbadoberfläche ist mit einer strichlierten Linie und mit 4a und 4b sind zwei Führungsleisten angedeutet, die sich im Fällbad befinden. Im Fällbad wird die Folie über eine Rolle (nicht dargestellt) umgelenkt und aus dem Fällbad abgezogen.

Wie der Fig. 1 entnommen werden kann, besteht die dargestellte Extrusionsdüse 1a besteht aus mehreren Teilen, die miteinander verschraubt oder genutet sein können. Der Aufbau dieser Düse entspricht dem Aufbau jener Düsen, die zur Schmelzextrusion polymerer, hochviskoser Stoffe üblicherweise verwendet werden. Beispielsweise ist es vorteilhaft, in der Düse Vorrichtungen zur gleichmäßigen Verteilung der zu extrudierenden Masse vorzusehen (nicht dargestellt).

Die NMMO-Celluloselösung wird von oben der Extrusionsdüse 1a unter Druck zugeführt (mittels vertikalem Pfeil angedeutet), durch eine Filterplatte gepreßt, die in der Fig. als schwarz ausgezogener Strich dargestellt ist. Diese Filterplatte wird von einer unter ihr befindlichen Stützplatte getragen. Danach gelangt das gefilterte Extrusionsgut in den eigentlichen Düsenkörper, der von den Teilen 9a und 9b gebildet wird. Die NMMO-Celluloselösung wird durch den Extrusionspalt 5 extrudiert. Der Extrusionsspalt 5 weist eine Querschnittserweiterung auf, die als Dekompressionszone wirkt. Die Extrusionsdüse 1a wird indirekt mittels eines Wärmeträgermediums beheizt, welches durch den schlitzförmigen Kanal 6 geleitet wird. Zwischen Extrusionsdüse 1a und Kühlgas-Zuführung 2a und 2b kann eine Wärmedämmung (nicht dargestellt) vorgesehen sein, um einen Wärmeübergang von der Düse 1a zur Zuführung 2a und 2b zu verhindern.

Die Einstellung des Düsenquerschnittes läßt sich relativ einfach durch Auswechseln der beiden Teile 9a und 9b bewerkstelligen, wobei die Dimensionen der übrigen Vorrichtungsteile nicht verändert werden müssen, was einen entscheidenden Vorteil der erfindungsgemäßen Vorrichtung darstellt.

Fig. 1 zeigt eine Vorrichtung, mit der das Exrusionsgut an zwei Seiten mit Kühlgas beblasen wird, wobei die Beblasungsrichtung im wesentlichen im rechten Winkel auf die Extrusionsrichtung steht.

Figur 2 zeigt den Querschnitt einer erfindungsgemäßen Vorrichtung zur Herstellung von Schlauchfolien. Die Vorrichtung besteht im wesentlichen aus einer ringförmigen Extrusionsdüse 1b, die aus mehreren Teilen besteht, die miteinander verschraubt oder genutet sein können. Die Einspeisung der Celluloselösung erfolgt exzentrisch von oben, wie durch einen vertikalen Pfeil in der Fig. 2 dargestellt ist. Das Extrusionsgut gelangt in einen ringförmigen Verteilraum 7, der von außen beheizt wird. Vom ringförmigen Verteilraum 7 wird die Lösung durch eine ringförmige Filterplatte gepreßt, die in der Figur als ausgezogener, schwarzer Strich dargestellt ist, und von einer darunter liegenden Stützplatte getragen wird. Anschließend gelangt die gefilterte Lösung in den geteilten Düsenkörper, der von zwei ringförmigen Hälften 8a und 8b gebildet wird. Auch bei dieser Ausgestaltung der erfindungsgemäßen Vorrichtung ist im Extrusionspalt 5 eine Erweiterung zur Dekomprimierung vorgesehen. Ab der Düsenlippe des Extrusionspaltes 5 wird das Extrusionsgut als schlauchförmiges, erhitztes Extrudat in die Luftstrecke gepreßt.

Analog der in Fig. 1 dargestellten Vorrichtung läßt sich auch hier die Einstellung des Düsenguerschnittes relativ einfach durch Auswechseln der beiden Teile 8a und 8b bewerkstelligen.

In der von den beiden Teilen 8a und 8b gebildeten ringförmigen Ausnehmung ist ein ringförmiger Körper eingelegt, der an seiner Außenseite und an seiner Innenseite schraubenlinienförmige Gänge aufweist, durch die die gefilterte Lösung in den Extrusionsspalt gepreßt wird.

Im Zentrum der Ringdüse 1b sind in Form konzenztrischer Rohre Zu- und Ableitungen für Kühlluft bzw. gebrauchte Kühlluft und Wasser bzw. Fällbadflüssigkeit vorgesehen. Mit der Bezugsziffer 11a ist die Zuleitung von Kühlluft bezeichnet, die auf einen strömungsmäßig günstig ausgeformten Prallteller 13 gelangt, dort horizontal umgelenkt wird und die schlauchförmig extrudierte Lösung 3b an der Schlauchinnenseite trifft. Ein Leitblech 14 sorgt dafür, daß ein Teil der Kühlluft unmittelbar zur Austrittskante des Extrusionspaltes 5 trifft. Die gebrauchte Kühlluft tritt über die Ableitung 11b wieder aus.

Zur verbesserten Kühlung ist außerhalb des vom Extrusionspalt 5 gebildeten Ringes eine Zuführung 2c für Kühlluft vorgesehen. Die Einbringung dieser zweiten Kühlluft ist - wie in Fig. 1 - mit zwei schräg nach unten gerichteten Pfeilen angedeutet.

Unterhalb des Pralltellers 13 ist eine tellerförmige Scheibe 15 vorgesehen, über die die Innenoberfläche des Schlauches 3b mit Fällungsmittel (Wasser) benetzt wird. Die Zuführung für dieses Fällungsmittel ist mit der Bezugsziffer 12a bezeichnet.

Um die Folie relativ lange zylindrisch führen zu können, sind unmittelbar unter der Fällbadoberfläche (strichliert angedeutet) Distanzscheiben 16 vorgesehen, deren äußerer Rand abgerundet ist, um die koagulierte, aber noch empfindliche Folie beim Darübergleiten nicht zu beschädigen. Es ist sehr zweckmäßig, darauf zu achten, daß die Auflauffläche, die eine Reibungsfläche zwischen Distanzscheibe 16 und Folie 3b darstellt, gering gehalten wird.

Die Distanzscheibe 16 ist in das Fällbad eingetaucht und dient auch zur Badberuhigung. Außerdem sind Bohrungen vorgesehenen, durch welche ein Stoffaustausch stattfinden kann.

Die Führung der Schlauchfolie kann im Fällbad über mehrere Distanzscheiben 16 erfolgen, bevor die Umlenkung über im Fällbad vorgesehene Führungsrollen (nicht dargestellt) erfolgt.

In der in Fig. 2 dargestellten Vorrichtung ist weiters ein Tauchrohr 17 vorgesehen, über das gebrauchtes Fällungsmittel, das über 12a zugeführt wurde, wieder abgesaugt werden kann. In dieses Tauchrohr münden auch Absaugrohre 18, die unmittelbar über der Fällbadoberfläche vorgesehen sind. Die Funktion dieses Tauchrohres ist nun folgende: Solange die Absaugrohre 18 nicht in die Fällbadoberfläche eintauchen, wird nicht Flüssigkeit sondern Luft abgesaugt. Sobald der Fällbadspiegel steigt und die beiden Absaugrohre eintauchen, wird sowohl über die Absaugrohre 18 als auch über das Tauchrohr 17 Fällbadflüssigkeit abgesaugt, bis die beiden Absaugrohre wieder aus dem Fällbad heraustreten und Luft eingesaugt wird. Durch diese Maßnahme wird auch vermieden, daß es im unteren Bereich des Schlauches, der im Fällbad steht, zu einer Anreicherung von NMMO kommt.

Zweckmäßigerweise sind der Prallteller 13 und die tellerförmige Scheibe 15 am Tauchrohr 17 verschiebbar angebracht, um Kühlung und Innenbenetzung regeln zu können.

Die erfindungsgemäße Kühlung ist derart effizient, daß Folien bei höherem Massedurchsatz extrudiert werden können, als dies mit den im Stand der Technik für Celluloselösungen vorgeschlagenen Extrusionsvorrichtungen möglich ist.

## Patentansprüche

1. Vorrichtung zur Herstellung cellulosischer Folien durch Extrusion einer erhitzten Lösung von Cellulose in einem tertiären Aminoxid, welche Vorrichtung eine Extrusionsdüse (1a; 1b) mit einem Extrusionsspalt (5) umfaßt, dadurch gekennzeichnet, daß unmittelbar unterhalb des Extrusionsspaltes (5) eine Zuführung (2a, 2b; 2c; 11a) für Kühlgas zur Kühlung der extrudierten Folie (3a; 3b) vorgesehen ist.

2. Vorrichtung nach Anspruch 1, dadurch gekennzeichnet, daß beiderseits des Extrusionspaltes (5) eine Zuführung (2a, 2b; 2c, 11a) für Kühlgas vorgesehen ist.

3. Vorrichtung nach Anspruch 1 zur Herstellung cellulosischer Schlauchfolien, dadurch gekennzeichnet, daß der Extrusionsspalt (5) der Extrusionsdüse (1a; 1b) im wesentlichen ringförmig ausgebildet ist und daß die Zuführung (2c) für Kühlgas außerhalb des Ringes vorgesehen ist.

4. Vorrichtung nach Anspruch 1 zur Herstellung cellulosischer Schlauchfolien, dadurch gekennzeichnet, daß der Extrusionsspalt (5) der Extrusionsdüse im wesentlichen ringförmig ausgebildet ist und daß eine Zuführung (11a) für Kühlgas und eine Ableitung (11b) für gebrauchtes Kühlgas im Zentrum des vom Extrusionsspalt (5) gebildeten Ringes vorgesehen sind.

5. Vorrichtung nach Anspruch 4, dadurch gekennzeichnet, daß die Zuführung (11a) für Kühlgas derart ausgebildet ist, daß das Kühlgas auf die Austrittskante des Extrusionsspaltes (5) gerichtet ist.

6. Vorrichtung nach Anspruch 4 oder 5, dadurch gekennzeichnet, daß eine weitere Zuführung (2c) für Kühlgas vorgesehen ist, welche außerhalb des vom Extrusionsspalt (5) ausgebildeten Ringes vorgesehen ist.

7. Vorrichtung nach einem der Ansprüche 4 bis 6, dadurch gekennzeichnet, daß im Zentrum des vom Extrusionsspalt (5) gebildeten Ringes eine Zuführung (12a) für ein Cellulose-Fällungsmittel und eine Ableitung (12b) für Fällbadflüssigkeit vorgesehen sind.

8. Vorrichtung nach einem der Ansprüche 4 bis 7, dadurch gekennzeichnet, daß unterhalb einer Ableitung (18) für die Fällbadflüssigkeit mindestens eine Distanzscheibe (16) vorgesehen ist, um ein Zusammenfallen der extrudierten Folie (3b) im Fällbad zu verhindern.

9. Verfahren zur Herstellung cellulosischer Folien, bei dem eine Lösung von Cellulose in einem tertiären Aminoxid in erhitztem Zustand durch eine Extrusionsdüse (1a; 1b) mit einem Extrusionsspalt (5) extrudiert und die erhitzte, extrudierte Lösung in ein Fällbad geführt wird, um die gelöste Cellulose zu fällen, dadurch gekennzeichnet, daß die erhitzte, extrudierte Lösung vor dem Einbringen in das Fällbad gekühlt wird, indem die erhitzte Lösung unmittelbar nach dem Extrudieren einem Gasstrom ausgesetzt wird.

10. Verfahren nach Anspruch 9, dadurch gekennzeichnet, daß die Extrusionsrichtung im wesentlichen im rechten Winkel zum Gasstrom steht.

11. Verfahren nach einem der Ansprüche 9 oder 10, dadurch gekennzeichnet, daß die erhitzte, extrudierte Lösung zwei Gasströmen ausgesetzt wird.

12. Verfahren nach Anspruch 11, dadurch gekennzeichnet, daß die erhitzte, geformte Lösung den zwei Gasströmen derart ausgesetzt wird, daß sie die warme, extrudierte Lösung an ihren gegenüberliegenden Seiten treffen.

13. Verfahren nach Anspruch 9 zur Herstellung cellulosischer Schlauchfolien, bei dem die erhitzte, cellulosische Lösung durch eine Extrusionsdüse mit ringförmigem Extrusionsspalt schlauchförmig extrudiert wird, dadurch gekennzeichnet, daß die erhitzte, schlauchförmig extrudierte Lösung dem Gasstrom an ihrer Außenseite ausgesetzt wird.

14. Verfahren nach Anspruch 9 zur Herstellung cellulosischer Schlauchfolien, bei dem die erhitzte, cellulosische Lösung durch eine Extrusionsdüse (1a; 1b) mit ringförmigem Extrusionsspalt (5) schlauchförmig extrudiert wird, dadurch gekennzeichnet, daß die erhitzte, schlauchförmig extrudierte Lösung dem Gasstrom an ihrer Innenseite ausgesetzt wird.

15. Verfahren nach Anspruch 14, dadurch gekennzeichnet, daß die erhitzte, schlauchförmig extrudierte Lösung sowohl an ihrer Innenseite als auch an ihrer Außenseite einem Gasstrom ausgesetzt wird.

16. Verfahren nach Anspruch 14 oder 15, dadurch gekennzeichnet, daß die erhitzte, schlauchförmig extrudierte Lösung nach Kühlung und vor der Führung in das Fällbad an ihrer Innenseite mit einem Cellulose-Fällungsmittel in Kontakt gebracht wird.

17. Verfahren nach einem oder mehrerer der Ansprüche 9 bis 16, dadurch gekennzeichnet, daß als tertiäres Aminoxid N-Methylmorpholin-N-oxid eingesetzt wird.

## Claims

1. Device for the preparation of cellulose sheets by extrusion of a heated solution of cellulose in a tertiary amine-oxide, which device comprises an extrusion die (1a; 1b) with an extrusion orifice (5), characterised in that, immediately below the extrusion orifice (5) an inlet (2a, 2b; 2c; 11a) for cooling gas is provided to cool the extruded sheet (3a; 3b).

2. Device in accordance with Claim 1, characterised in that, on both sides of the extrusion orifice (5) an inlet (2a, 2b; 2c; 11a) for cooling gas is provided.

3. Device in accordance with Claim 1 for the preparation of cellulose tubular film, characterised in that, the extrusion orifice (5) of the extrusion die (1a; 1b) is designed essentially ring-shaped and that the inlet (2c) for the cooling gas is provided outside the ring.

4. Device in accordance with Claim 1 for the preparation of cellulose tubular film, characterised in that, the extrusion orifice (5) of the extrusion die is designed essentially ring-shaped and that an inlet (11a) for cooling gas and an outlet (11b) for used cooling gas are provided in the centre of the ring formed by the extrusion orifice (5).

5. Device in accordance with Claim 4, characterised in that, the inlet (11a) for cooling gas is designed so that the cooling gas is directed onto the outlet edge of the extrusion orifice (5).

6. Device in accordance with Claim 4 or 5, characterised in that, a further inlet (2c) for cooling gas is provided which is located outside the ring formed by the extrusion orifice (5).

7. Device in accordance with one of the Claims 4 to 6, characterised in that, in the centre of the ring formed by the extrusion orifice (5) an inlet (12a) for a cellulose precipitation agent and an outlet (12b) for a cellulose precipitation bath liquid are provided.

8. Device in accordance with one of the Claims 4 to 7, characterised in that, below an outlet (18) for the precipitation bath liquid at least one spacer plate (16) is provided to prevent collapsing of the extruded film (3b) in the precipitation bath.

9. Process for the preparation of cellulose sheet in which a solution of cellulose in a tertiary amine-oxide in the heated state is extruded through an extrusion die (1a; 1b) with an extrusion orifice (5), and the heated extruded solution is led into a precipitation bath in order to precipitate the dissolved cellulose, characterised in that, the heated extruded solution is cooled by exposure to a gas stream immediately after extrusion and before its introduction into the precipitation bath.

10. Process in accordance with Claim 9, characterised in that, the direction of extrusion is essentially at right angles to the gas stream.

11. Process in accordance with one of the Claims 9 or 10, characterised in that, the heated extruded solution is exposed to two gas streams.

12. Process in accordance with Claim 11, characterised in that, the heated extruded solution is exposed to the two gas streams in such a way that they strike the heated extruded solution on its opposing sides.

13. Process in accordance with Claim 9 for the preparation of cellulose tubular film in which the heated cellulose solution is extruded in the form of a tube through an extrusion die with a ring-shaped extrusion orifice, characterised in that, the heated tubular extruded solution is exposed on its outer side to the gas stream.

14. Process in accordance with Claim 9 for the preparation of cellulose tubular film in which the heated cellulose solution is extruded in the form of a tube through an extrusion die (1a; 1b) with a ring-shaped extrusion orifice (5), characterised in that, the heated tubular extruded solution is exposed on its inner side to the gas stream.

15. Process in accordance with Claim 14, characterised in that, the heated tubular extruded solution is exposed both on its inner side as well as on its outer side to a gas stream.

16. Process in accordance with Claim 14 or 15, characterised in that, the heated tubular extruded solution is brought into contact with a cellulose precipitation agent on its inner side after cooling and before its introduction into the precipitation bath.

17. Process in accordance with one or more of the Claims 9 to 16, characterised in that, N-methylmorpholine-N-oxide is used as the tertiary amine-oxide.

## Revendications

1. Un dispositif pour la préparation de feuilles de cellulose par extrusion d'une solution chauffée de cellulose dans un amine-oxyde tertiaire, lequel dispositif comporte une filière d'extrusion (1; 1b) avec un orifice d'extrusion (5), caractérisé par le fait qu'immédiatement en-dessous de l'orifice d'extrusion (5) se trouve une sortie de gaz de refroidissement (2a, 2b; 2c; 11a) pour refroidir la feuille extrudée (3a; 3b).

2. Un dispositif selon la revendication 1 caractérisé par le fait que sur les deux côtés de l'orifice d'extrusion (5) une arrivée de gaz de refroidissement (2a, 2b; 2c; 11a) est aménagée.

3. Un dispositif selon la revendication 1 pour la préparation de films tubulaires de cellulose caractérisé par le fait que l'orifice d'extrusion (5) de la filière d'extrusion (1a; 1b) a une forme essentiellement annulaire et que l'arrivée de gaz de refroidissement (2c) est aménagée à l'extérieur de l'anneau.

4. Un dispositif selon la revendication 1 pour la préparation de films tubulaires en cellulose caractérisé par le fait que l'orifice d'extrusion (5) de la filière d'extrusion a une forme essentiellement annulaire et qu'une arrivée de gaz de refroidissement (11a) et une sortie de gaz de refroidissement usé (11b) sont prévues dans le centre de l'anneau formé par l'orifice d'extrusion (5).

5. Un dispositif selon la revendication 4 caractérisé par le fait que l'arrivée de gaz de refroidissement (11a) est conçue de manière à ce que le gaz de refroidissement soit dirigé sur le bord de sortie de l'orifice d'extrusion (5).

6. Un dispositif selon la revendication 4 ou 5 caractérisé par le fait qu'une deuxième arrivée de gaz de refroidissement (2c) est prévue, à l'extérieur de l'anneau formé par l'orifice d'extrusion (5).

7. Un dispositif selon l'une quelconque des revendications 4 à 6, caractérisé par le fait qu'au centre de l'anneau formé par l'orifice d'extrusion (5) une arrivée d'agent de précipitation de la cellulose (12a) et une sortie de liquide de bain de précipitation de cellulose (12b) sont prévues.

8. Un dispositif selon l'une quelconque des revendications 4 à 7, caractérisé par le fait qu'en-dessous d'une sortie (18) pour le liquide du bain de précipitation, il est aménagé au moins une plaque de maintien (16) pour enpêcher l'affaissement du film extrudé (3b) dans le bain de précipitation.

9. Un procédé pour la préparation de feuille de cellulose dans lequel une solution de cellulose dans un amine-oxyde tertiaire chauffée est extrudée par une filière d'extrusion (1a; 1b) pourvue d'un orifice d'extrusion (5), et dans lequel la solution chauffée et extrudée est amenée dans un bain de précipitation afin que la cellulose dissoute soit précipitée, caractérisé par le fait que la solution chauffée et extrudée est refroidie en étant exposée à un courant gazeux immédiatement après l'extrusion et avant l'introduction dans le bain de précipitation.

10. Un procédé selon la revendication 9 caractérisé par le fait que le sens de l'extrusion est essentiellement à la verticale du courant gazeux.

11. Un procédé selon l'une quelconque des revendications 9 ou 10 caractérisé par le fait que la solution chauffée extrudée est exposée à deux courants gazeux.

12. Un procédé selon la revendication 11 caractérisé par le fait que la solution chauffée extrudée est exposée aux deux courants gazeux de manière à ce que ceux-ci frappent la solution chauffée extrudée sur ses faces opposées.

13. Un procédé selon la revendication 9 pour la préparation d'un film tubulaire de cellulose dans lequel la solution chauffée de cellulose est extrudée sous la forme d'un tube par une filière avec un orifice d'extrusion en forme d'anneau, caractérisé par le fait que la solution chauffée extrudée tubulaire est exposée sur sa face extérieure au courant gazeux.

14. Un procédé selon la revendication 9 pour la préparation d'un film tubulaire de cellulose dans lequel la solution de cellulose est extrudée sous la forme d'un tube par une filière d'extrusion (1a; 1b) avec un orifice d'extrusion annulaire (5), caractérisé par le fait que la solution chauffée extrudée tubulaire est exposée sur sa face intérieure au courant gazeux.

15. Un procédé selon la revendication 14 caractérisé par le fait que la solution chauffée extrudée tubulaire est exposée à la fois sur sa face intérieure et sur sa face extérieure à un courant gazeux.

16. Un procédé selon la revendication 14 ou 15 caractérisé par le fait que la solution chauffée extrudée tubulaire est mise en contact avec un agent de précipitation sur sa face intérieure après refroidissement et avant introduction dans le bain de précipitation.

17. Un procédé selon toute revendication 9 à 16 caractérisé par le fait que du N-méthylmorpholine-N-oxyde est utilisé comme amine-oxyde tertiaire.
